(19) Europäisches Patentamt / European Patent Office / Office européen des brevets

(11) **EP 2 664 949 B1**

(12) **FASCICULE DE BREVET EUROPEEN**

(45) Date de publication et mention
de la délivrance du brevet:
**29.06.2016 Bulletin 2016/26**

(21) Numéro de dépôt: **13167878.1**

(22) Date de dépôt: **15.05.2013**

(51) Int Cl.:
*G02B 6/126* (2006.01)     *G02F 1/313* (2006.01)
*G02F 1/01* (2006.01)      *G02F 1/225* (2006.01)
*G02B 6/122* (2006.01)     *G02B 6/26* (2006.01)
*G02B 6/12* (2006.01)

(54) **Coupleur optique séparateur de polarisation**

Optischer Koppler mit Polarisationstennung

Optical coupler with polarity separation

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.05.2012 FR 1254441**

(43) Date de publication de la demande:
**20.11.2013 Bulletin 2013/47**

(73) Titulaires:
 • **COMMISSARIAT A L'ENERGIE ATOMIQUE ET
   AUX
   ENERGIES ALTERNATIVES
   75015 Paris (FR)**
 • **Alcatel Lucent, S.A.
   75007 Paris (FR)**

(72) Inventeurs:
 • **Ben Bakir, Badhise
   38590 BREZINS (FR)**
 • **Descos, Antoine
   38000 GRENOBLE (FR)**

 • **Le Liepvre, Alban
   91460 MARCOUSSIS (FR)**
 • **Lamponi, Marco
   91460 MARCOUSSIS (FR)**
 • **De Valicourt, Guilhem
   91460 MARCOUSSIS (FR)**
 • **Duan, Guang-Hua
   91460 MARCOUSSIS (FR)**

(74) Mandataire: **Thibon, Laurent
   Cabinet Beaumont
   1, rue Champollion
   38000 Grenoble (FR)**

(56) Documents cités:
   **US-A1- 2008 025 665**

 • **XIANKAI SUN ET AL: "Adiabaticity criterion and
   the shortest adiabatic mode transformer in a
   coupled-waveguide system", OPTICS LETTERS,
   OSA, OPTICAL SOCIETY OF AMERICA,
   WASHINGTON, DC, US, vol. 34, no. 3, 1 février
   2009 (2009-02-01), pages 280-282, XP001521869,
   ISSN: 0146-9592, DOI: 10.1364/OL.34.000280**

EP 2 664 949 B1

**Description**

Domaine de l'invention

La présente invention concerne le domaine de la nano-optoélectronique. Elle concerne plus particulièrement un coupleur séparateur de polarisation et/ou de longueurs d'onde.

Exposé de l'art antérieur

Dans le domaine de la nano-photonique on utilise notamment des guides d'onde optiques planaires à faible ou à fort contraste d'indice, couramment des guides à coeur en silicium ou autre semiconducteur et à couche de recouvrement en oxyde ou nitrure de silicium ou autre diélectrique.

L'utilisation de ces guides planaires permet d'intégrer de façon compacte, et sur une même puce, des fonctions optiques complexes comme le multiplexage, le démultiplexage, la modulation, le routage spectral, etc. Ces fonctions peuvent être aussi bien dédiées à des liaisons optiques très courte distance, à l'échelle du millimètre (exemple : communication intra-puce) que pour de très longues distances, de l'ordre de plusieurs milliers de kilomètres, en passant par des liaisons de distances intermédiaires (ex : réseau d'accès). En outre, ces fonctions optiques permettent de traiter des informations de grand débit, bien adaptées pour solutionner les problèmes liés à l'augmentation du débit des bus d'interconnexion.

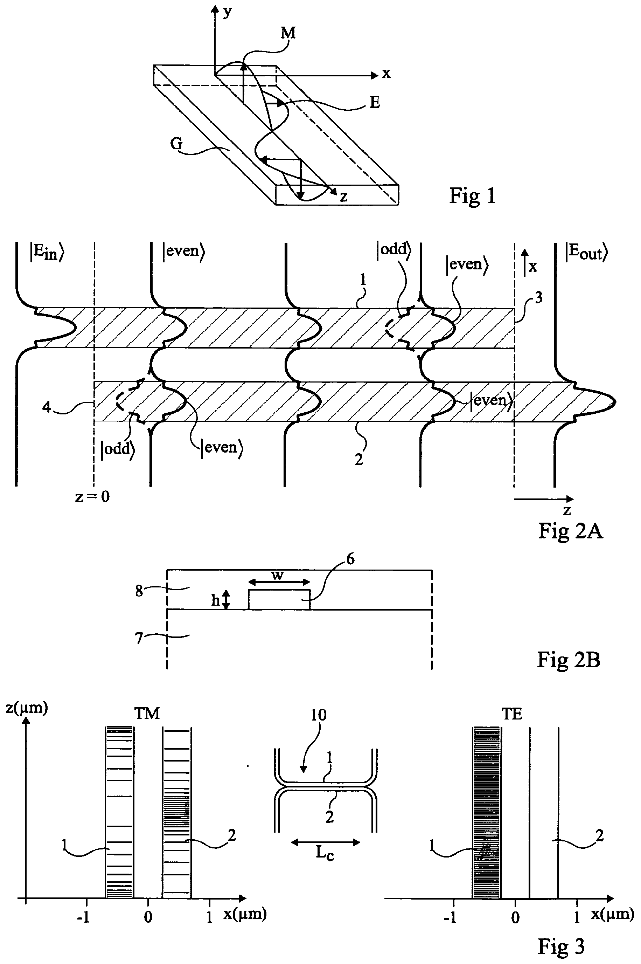

Dans la présente description, on utilisera les conventions et notations suivantes. On définit pour une onde électromagnétique (optique) ayant des composantes de champ électrique et de champ magnétique, orthogonales à la direction de propagation, se propageant dans un guide d'onde optique réalisé dans un plan donné, des états de polarisation TE (transverse electric) et TM (transverse magnetic). Dans l'état TE (ou considéré comme tel quand le champ est très majoritairement polarisé TE), la composante de champ électrique E est parallèle au plan du guide et, dans l'état TM (ou considéré comme tel quand le champ est très majoritairement polarisé TM), la composante de champ électrique est perpendiculaire au plan du guide. Ceci est illustré en figure 1 dans le cas de l'état de polarisation TE. Dans cette figure, E désigne le champ électrique, M désigne le champ magnétique, et G désigne un guide d'onde.

Une difficulté particulière dans la conception et la réalisation de ces guides d'onde réside dans le contrôle de la polarisation de la lumière. En effet, dans un guide d'onde optique de rapport de forme arbitraire, les deux états de polarisation d'un signal optique ne se propagent pas, a priori, à la même vitesse (sauf si la section du guide est rigoureusement carrée). On parle alors de dispersion en polarisation du mode optique ou, de manière équivalente, de guide d'onde optique biréfringent.

La biréfringence (B) est classiquement définie comme étant la différence entre les indices effectifs $n_{TE}$ et $n_{TM}$ affectés aux polarisations TE et TM : $B = n_{TE} - n_{TM}$

On peut noter principalement deux types de processus biréfringents dans les guides d'onde :

- le premier est une biréfringence de forme, notée $B_{form}$, due au rapport de forme généralement asymétrique de la section d'un guide d'onde ;
- le deuxième est une biréfringence, notée $B_{mat}$, qui est due au matériau dans lequel est inscrit le guide ; elle peut être intrinsèque comme dans le cas des matériaux anisotropes ou bien induite par les processus de fabrication des guides, par exemple lorsque le guide est formé sur un substrat tel que du silicium sur isolant (SOI), les contraintes qui peuvent se produire à l'interface génèrent un processus de dispersion en polarisation additionnel.

D'une manière générale, le processus dominant est celui qui est lié au rapport de forme des guides, de telle sorte que Bform >> Bmat.

Pour réaliser des circuits optiques/photoniques intégrés encore plus performants, il faut concevoir un composant capable d'orienter les états de polarisation dans des sous-circuits photoniques dans lesquels des fonctions optiques seront dédiées à chacune des polarisations, TE ou TM. En effet, pour des applications moyennes et longues distances (de quelques mètres à plusieurs milliers de kilomètres) le moyen de transport privilégié des ondes optiques est la fibre optique. Malencontreusement, l'état de polarisation d'un signal optique véhiculé dans une fibre optique monomode standard est une quantité aléatoire qui change continuellement avec le temps. De plus, un circuit intégré photonique est naturellement très sensible à la polarisation. Par exemple, le taux de couplage entre une fibre optique et un guide planaire dépend de l'état de polarisation. En réception, cette sensibilité est incompatible avec une connexion directe du circuit au réseau de fibres optiques dans lesquelles l'état de polarisation est à la fois méconnu et continuellement variable. Par conséquent, un des tous premiers besoins est de développer des circuits à diversité de polarisation dans lesquels les polarisations TE et TM peuvent être traitées séparément.

Un autre élément clé dans un circuit photonique est un démultiplexeur de longueur d'onde. Sa fonction est de séparer par exemple deux longueurs d'onde ou deux groupes de longueurs d'onde véhiculés dans un même guide vers deux guides de sortie.

La figure 2A illustre le principe d'un séparateur de polarisation ou coupleur co-directionnel à guides d'onde. Cette figure représente en vue de dessus deux portions de guides d'onde coplanaires parallèles 1 et 2. Le guide d'onde 1 s'arrête en un point 3 et le guide d'onde 2 démarre en un point 4. Le couplage est réalisé dans une zone où les deux guides sont juxtaposés dans un plan (ou coplanaires).

La figure 2B est une vue en coupe schématique d'une réalisation classique d'un guide d'onde optique. Ce guide d'onde est constitué d'une portion rectangulaire de hauteur h et de largeur w d'un premier matériau 6 entouré d'un deuxième matériau d'indice optique différent comprenant par exemple un support 7 et une couche d'enrobage 8. Dans une réalisation courante, le premier matériau 6 est du silicium et le support et l'enrobage 8 sont en oxyde de silicium. De façon générale, quand plusieurs guides d'ondes sont formés dans un même circuit photonique, tous les guides d'ondes peuvent avoir des hauteurs h et des largeurs w différentes.

Dans un guide d'onde isolé, on peut définir pour une longueur d'onde $\lambda$ un indice efficace $n_{eff}$ et une constante de propagation $\beta$ égale à $2\pi.n_{eff}/\lambda$. Par contre, dans un système couplé, la zone de couplage sous-tend des supermodes qui sont des combinaisons linéaires des modes locaux des guides d'entrée et de sortie, pris individuellement. Ces supermodes sont généralement appelés modes pair (even) et impair (odd). Le champ électrique E est décrit par l'équation suivante :

$$E(x, z) = E_{even}(x)e^{-j\beta_{even}z} + E_{odd}(x)e^{-j\beta_{odd}z}$$

$$\left|E(x, z)\right| = \left|E_{even}(x) + E_{odd}(x)e^{j(\beta_{even} - \beta_{odd})z}\right| .$$

A l'entrée du coupleur, pour $z = 0$, le champ est confiné dans le premier guide de telle sorte que :

$$\left|E_{in}\right| = \left|E_{even}(x) + E_{odd}(x)\right|$$

En sortie, pour $z = \pi/(\beta_{even}-\beta_{odd})$, le mode est confiné dans le deuxième guide d'onde :

$$\left|E_{in}\right| = \left|E_{even}(x) - E_{odd}(x)\right|$$

L'efficacité de couplage optimal, F, est définie comme étant la fraction de puissance transmise d'un premier guide vers un second guide au bout d'une distance caractéristique dite longueur de couplage $L_C$ :

$$F = 1 - (\Delta_{neff,L}/\Delta_{neff,S})^2 \qquad (1)$$

avec

$$L_c = \frac{\lambda}{2\sqrt{\Delta n_{eff,S}^2 + \Delta n_{eff,L}^2}} \qquad (2)$$

où :

$\lambda$ est la longueur d'onde de fonctionnement.

$\Delta n_{eff,L}$ est la différence entre les indices effectifs des modes supportés par les premier et second guides en l'absence de couplage (les guides sont pris individuellement). Ces modes guidés sont appelés modes locaux.

$\Delta n_{eff,S}$ est la différence entre les indices effectifs des modes supportés par la structure de couplage comprenant les deux guides juxtaposés. Ces deux supermodes sont par construction de symétrie opposée. On parlera alors de supermodes symétrique et antisymétrique. Cette quantité physique dépend de la distance qui sépare les deux guides. Elle conditionne la longueur de couplage, $L_C$, ainsi que le taux de puissance transférée.

A noter que le transfert de puissance d'un guide à l'autre est un processus harmonique et donc réversible. En considérant une puissance nominale, $P_0$, injectée dans le premier guide, la puissance collectée, ou transmise, $P_{1\to2}$ dans le second guide à la position z s'exprime de la façon suivante :

$$P_{1\to2}(z) = P_0 \cdot F \sin^2(\pi.z/2L_C) \hspace{2cm} (3)$$

On remarquera d'après la relation (3) que le transfert de puissance du premier guide vers le second guide est optimal pour des multiples impairs de la longueur caractéristique de couplage.

Un moyen de coupler une seule polarisation est de concevoir un système couplé pour lequel le rapport des différences d'indices effectifs des supermodes pour chaque état de polarisation est très élevé ; $\Delta n_{eff,S,TM} \gg \Delta n_{eff,S,TE}$, typiquement, ce qui conduit à : $L_{cTM} \ll L_{cTE}$

Dans ces conditions on peut coupler la quasi-totalité d'un état de polarisation d'un guide vers un autre tout en préservant l'autre état de polarisation sur le premier guide. Un exemple de résultat possible est illustré en figure 3 dans laquelle :

- la partie centrale illustre une vue au microscope d'un coupleur 10 entre deux portions de guide 1 et 2 ;
- la partie gauche illustre une simulation de la propagation de la polarisation TM ; on y voit que, pour une longueur de couplage optimale, $L_C$, le mode TM est pratiquement totalement transféré du premier guide au deuxième (les zones sombres correspondant à la présence du mode TM et les zones claires à son absence) ;
- la partie droite illustre une simulation de la propagation de la polarisation TE ; on y voit que ce mode TE n'est pas transféré du premier guide au deuxième (les zones sombres correspondant à la présence du mode TE et les zones claires à son absence).

Dans le cas d'un couplage tel que décrit ci-dessus entre deux guides identiques, il faut que les indices effectifs soient rigoureusement identiques pour obtenir un couplage optique de l'onde de 100 %, ce qui pose une contrainte sur la définition de la largeur des guides d'onde pour accorder les indices effectifs. La deuxième contrainte est que le couplage optimal ne peut s'effectuer que sur une distance précise qui est la longueur de battement ou longueur de couplage $L_C$ évoquée précédemment. Si la longueur est inférieure à $L_C$, le couplage ne sera pas totalement réalisé. Si la longueur est supérieure à $L_C$, le couplage se fera sur une distance $L_C$, puis le mode se découplera en partie sur la distance restante (pour une longueur $L=2*L_C$, le mode revient à son état initial).

Il existe donc un besoin en optoélectronique pour un coupleur/séparateur palliant au moins certains des inconvénients des structures antérieures.

Le document US 2008/025665 A1 divulgue un coupleur/séparateur comprenant deux portions de guides d'onde coplanaires voisines s'étendant dans une même direction, la première portion étant à section constante, la deuxième portion étant à section variable de façon que l'indice effectif de la deuxième portion de guide d'onde passe, de l'amont vers l'aval, d'une première valeur inférieure à une deuxième valeur supérieure à l'indice effectif de la première portion, dans des conditions de couplage adiabatique.

Résumé

Un objet de modes de réalisation de la présente invention est de prévoir un coupleur/séparateur à guides d'onde ayant un rendement de conversion particulièrement élevé et peu sensible aux variations résultant notamment des dérives de fabrication.

Ainsi, un mode de réalisation de la présente invention prévoit un coupleur/séparateur comprenant des premier et deuxième guides d'onde coplanaires à section constante s'étendant dans une même direction, et un segment de guide intercalaire s'étendant entre les premier et deuxième guides, le guide intercalaire ayant une section variable de façon que son indice effectif passe, de l'amont vers l'aval, d'une première valeur inférieure à une deuxième valeur supérieure à l'indice effectif du premier guide d'onde, le guide intercalaire étant couplé adiabatiquement au premier guide dans sa partie amont et au deuxième guide dans sa partie aval.

Selon un mode de réalisation de la présente invention, le côté de la deuxième portion voisin de la première portion est parallèle au côté adjacent de la première portion.

Selon un mode de réalisation de la présente invention, le côté de la deuxième portion voisin de la première portion est rectiligne.

Selon un mode de réalisation de la présente invention, le côté de la deuxième portion distant de la première portion est rectiligne.

Selon un mode de réalisation de la présente invention, le coupleur/séparateur comprend une pluralité de segments intercalaires couplés adiabatiquement entre eux.

Selon un mode de réalisation de la présente invention, le premier guide comprend en aval de la première portion un parcours sinueux.

Selon un mode de réalisation de la présente invention, tous les guides d'onde et portions de guides d'onde ont une même épaisseur, les variations de section correspondant à des variations de largeur.

Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1, décrite précédemment, illustre en relation avec un guide d'onde un mode de polarisation TE ;
la figure 2A, décrite précédemment, représente deux guides d'onde parallèles couplés ainsi que l'allure des modes se propageant dans ces guides d'onde ;
la figure 2B, décrite précédemment, est une vue en coupe d'un guide d'onde ;
la figure 3, décrite précédemment, illustre en son centre deux guides d'onde couplés, dans sa partie gauche le transfert du mode TM du premier au deuxième guide, et dans sa partie droite le non-transfert du mode TE du premier au deuxième guide ;
la figure 4 est une vue de dessus de deux guides d'onde couplés selon un mode de réalisation de la présente invention ;
la figure 5 représente des courbes de transmission pour des guides d'onde couplés du type de ceux de la figure 4 aussi bien pour le mode TE que pour le mode TM ;
la figure 6 représente une variante d'un coupleur selon un mode de réalisation de la présente invention ;
la figure 7 représente une autre variante d'un coupleur selon un mode de réalisation de la présente invention ; et
la figure 8 représente une configuration particulière du guide d'entrée après la zone de couplage.

Comme cela est habituel dans la représentation des circuits intégrés optiques ou électroniques, les diverses figures ne sont pas tracées à l'échelle.

Description détaillée

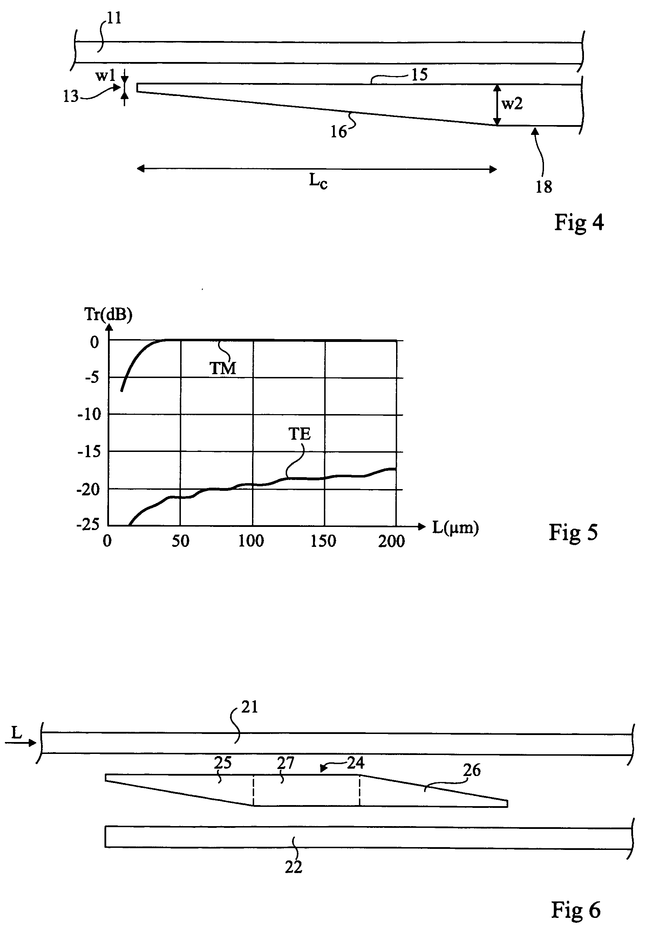

La figure 4 représente un mode de réalisation d'un coupleur/séparateur tel que proposé ici. Ce coupleur/séparateur comprend deux guides d'onde : un premier guide d'onde 11 à section constante tel que les guides d'onde 1 et 2 décrits précédemment et un deuxième guide d'onde 13 qui, dans la partie de couplage $L_C$, a une section variable, c'est-à-dire une largeur variable dans le cas classique où le coeur de ce guide d'onde a une épaisseur constante. Au-delà de la zone de couplage $L_C$, le deuxième guide d'onde 13 a une largeur constante.

En supposant que la lumière vient de la gauche (côté amont), la variation de largeur du guide d'onde 13 sur la longueur de couplage $L_C$ est choisie pour que ce guide d'onde ait initialement une largeur $w_1$ inférieure à la largeur du premier guide d'onde et qu'il ait dans la zone de sortie une largeur $w_2$ supérieure à la largeur du premier guide d'onde. Il en résulte que l'indice effectif dans la partie amont du deuxième guide est inférieur à l'indice effectif dans sa partie aval.

En outre, le profil d'élargissement dans la zone de couplage $L_C$ est choisi pour que le transfert de mode se produise dans des conditions d'adiabaticité, par exemple telles que définies dans l'article de Xiankai Sun, Hsi-Chun Liu et Amnon Yariv paru dans Optics Letters, volume 34, N°3 du 1er février 2009. On notera que cet article considère le couplage entre deux guides d'onde superposés alors que la présente description vise le cas de deux guides d'onde coplanaires. Par ailleurs, il porte sur un mode de conception particulier qui donne un critère d'adiabaticité pour une longueur de couplage la plus courte possible. Grâce au respect des conditions d'adiabaticité, on obtient avec des guides d'onde coplanaires un transfert optimal du mode de polarisation TM du premier guide au deuxième guide et ce transfert reste satisfaisant même si les dimensions ne sont pas rigoureuses.

Ainsi, les conditions principales à respecter pour assurer un transfert de l'onde TM sans transfert de l'onde TE sont de prévoir une zone de couplage dans laquelle il y a une variation d'indice effectif de couplage entre l'amont et l'aval de la zone de couplage, la longueur de couplage étant choisie pour que le transfert soit quasi-complet et que le transfert du mode TM soit optimisé. Il convient de plus que l'indice effectif du premier guide, dans la zone de couplage, soit compris dans l'intervalle de variation de l'indice effectif du deuxième guide. De façon connue, et comme cela découle de l'article susmentionné, ces dimensions optimales ne peuvent pas être fixées par des formules analytiques, sauf pour des formes spécifiques décrites dans l'article de Yariv. Mais, d'une manière générale, et pour des formes classiques (linéaire, exponentielle, polynomiale), la longueur de couplage est déterminée a posteriori par simulation.

En pratique, pour fixer la longueur $L_C$, on procède par simulation : on calcule la quantité de mode TM transférée dans le deuxième guide au fur et à mesure que l'on se dirige vers l'aval de ce deuxième guide, et on sélectionne la longueur correspondant à un couplage maximal du mode TM.

On a représenté la partie de couplage du deuxième guide comme comprenant une première face 15 voisine du premier guide d'onde et parallèle à la face en regard de ce premier guide d'onde, la deuxième face 16 éloignée du premier guide d'onde étant rectiligne et non parallèle à celle du premier guide d'onde. On notera que diverses variantes peuvent être apportées à cette réalisation. Selon une première variante, la première face n'est pas nécessairement parallèle à la face en regard du premier guide d'onde, mais ceci constitue un mode de réalisation préféré car ceci confère une plus grande robustesse (invariance par rapport aux variations du procédé de fabrication) au coupleur/séparateur. Selon une deuxième variante, la deuxième face 16 n'est pas rectiligne, mais peut avoir tout contour choisi et correspond par exemple à une fonction quadratique, exponentielle ou polynomiale de la distance z à l'origine du coupleur/séparateur.

Enfin, on notera que le deuxième guide se prolonge sur une partie 18. Cette partie peut rester parallèle au premier guide d'onde. Ceci a peu d'influence sur le fonctionnement du coupleur/séparateur car, étant donné que cette partie 18 est nettement plus large que le premier guide d'onde 11, il n'y a pratiquement pas de couplage entre les guides d'onde dans cette zone.

La figure 5 illustre le taux de transmission en dB des modes TM et TE du premier guide vers le deuxième guide pour un coupleur/séparateur du type de celui de la figure 4. La courbe TM indique qu'à partir d'une certaine longueur de couplage (supérieure à environ 30 $\mu$m dans l'exemple représenté), le mode TM pratiquement non atténué se retrouve dans le deuxième guide. La courbe TE indique que la partie du mode TE se retrouvant dans le deuxième guide est très faible du moment que la longueur de couplage n'est pas excessive (inférieure à 75 $\mu$m dans l'exemple représenté). En effet, comme le souligne l'article susmentionné de Sun, Liu et Yariv dans la dernière partie de son premier paragraphe "Un coupleur adiabatique, ..., ne nécessite pas une définition précise de la longueur de transfert de puissance mais il doit être suffisamment long pour satisfaire aux critères d'adiabaticité pour réduire le couplage de puissance dans les modes indésirés" ("An adiabatic coupler, ..., does not require a precise definition of power-transfer length but it has to be sufficiently long to satisfy the adiabatic condition to reduce the coupling of power into other unwanted modes").

La figure 6 représente une variante de réalisation d'un coupleur/séparateur adiabatique à guides coplanaires. Dans cette variante, deux guides 21 et 22 à section régulière s'étendent parallèlement l'un à l'autre. Entre ces deux guides, est prévu un segment de guide intercalaire 24 dont la partie gauche comprend une portion de couplage 25 similaire à la partie de couplage de longueur $L_C$ décrite en relation avec la figure 4, et dont la partie droite comprend une partie de couplage 26 symétrique de la précédente, une partie intermédiaire 27 de guide parallèle étant de préférence interposée entre les parties de couplage 25 et 26. Ainsi, quand de la lumière L pénètre dans le guide d'onde 21 et comprend de la lumière polarisée TE et de la lumière polarisée TM, la lumière polarisée TM est transférée vers la partie de couplage 25 puis, passe par la partie intermédiaire 27 vers la partie de couplage 26 d'où elle est couplée vers le guide 22. Les guides 21 et 22 peuvent avoir des sections différentes, le guide 21 étant optimisé en largeur pour favoriser la propagation du mode TE et le guide 22 optimisé en largeur pour favoriser la propagation du mode TM.

Selon une variante, la partie 27 peut ne pas être présente. Dans ce cas, les deux parties 25 et 26 sont directement raccordées l'une à l'autre.

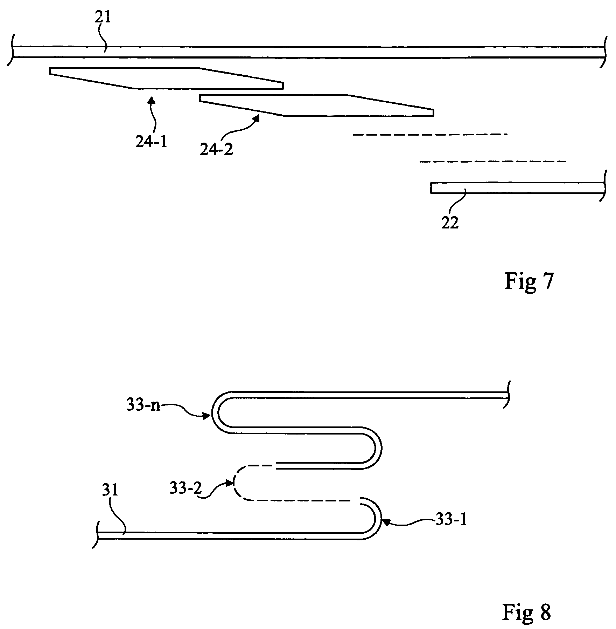

Selon une variante de réalisation illustrée en figure 7, les deux guides 21 et 22 peuvent être séparés par une pluralité d'éléments de couplage intercalaires 24-1, 24-2 ..., ces éléments de couplage intercalaires favorisant le passage de l'un vers l'autre puis vers le guide 22 de la lumière polarisée TM pénétrant dans le guide 21. Cette structure à plusieurs guides intercalaires présente notamment l'avantage de réduire le résidu éventuel de lumière polarisée TE transféré vers le guide 22. En effet, si le premier élément intercalaire laisse passer une faible proportion $\varepsilon$ de lumière polarisée TE vers l'élément suivant, cet élément suivant ne laissera passer qu'une proportion $\varepsilon^2$. S'il y a n-1 éléments intercalaires, on aura dans le guide final 22 seulement une proportion $\varepsilon^n$ de lumière polarisée TE.

La figure 8 représente une configuration particulière d'un premier guide 31 ayant reçu de la lumière polarisée TE et de la lumière polarisée TM, dont la lumière polarisée TM a été transférée vers un autre guide par l'intermédiaire d'un système de couplage non représenté. Il reste néanmoins toujours une petite partie $\varepsilon$ de lumière TM dans le guide 31. Pour réduire encore cette proportion, le guide 31 comprend une série de virages 33-1, 33-2 ..., 33-n. En effet, il est connu que pour des virages à faible rayon de courbure, l'onde polarisée TE n'est pratiquement pas atténuée tandis que l'onde polarisée TM est fortement atténuée, par exemple de 8 à 10 dB.

Des modes de réalisation particuliers de la présente invention ont été décrits. Diverses variantes et modifications apparaîtront à l'homme de l'art. En particulier, la présente description a été faite dans le cadre d'un coupleur/séparateur de polarisation. On notera que ce coupleur/séparateur peut également être utilisé comme séparateur de longueurs d'onde dans le cas où l'onde optique incidente comprend deux composantes fréquentielles. Dans ce cas, le signal de la grande longueur d'onde sera transféré vers un autre guide, tandis que le signal de la petite longueur d'onde restera dans le guide d'entrée.

Divers modes de réalisation avec diverses variantes ont été décrits ci-dessus. On notera que l'homme de l'art pourra combiner divers éléments de ces divers modes de réalisation et variantes sans faire preuve d'activité inventive.

**Revendications**

1. Coupleur/séparateur comprenant des premier et deuxième guides d'onde coplanaires (21, 22) à section constante s'étendant dans une même direction, et un segment de guide intercalaire (24) s'étendant entre les premier et deuxième guides, le guide intercalaire ayant une section variable de façon que son indice effectif passe, de l'amont vers l'aval, d'une première valeur inférieure à une deuxième valeur supérieure à l'indice effectif du premier guide d'onde, le guide intercalaire étant couplé adiabatiquement au premier guide dans sa partie amont et au deuxième guide dans sa partie aval.

2. Coupleur/séparateur selon la revendication 1, dans lequel le côté (25) du guide intercalaire voisin du premier guide d'onde est parallèle au côté adjacent du premier guide d'onde.

3. Coupleur/séparateur selon la revendication 2, dans lequel le côté (15) du guide intercalaire voisin du premier guide d'onde est rectiligne.

4. Coupleur/séparateur selon la revendication 3, dans lequel le côté (16) du guide intercalaire distant du premier guide d'onde est rectiligne.

5. Coupleur/séparateur selon l'une quelconque des revendications 1 à 4, comprenant une pluralité de guides intercalaires (24-1, 24-2, ...) couplés adiabatiquement entre eux.

6. Coupleur/séparateur selon l'une quelconque des revendications 1 à 5, dans lequel le premier guide comprend en aval du guide intercalaire un parcours sinueux.

7. Coupleur/séparateur selon l'une quelconque des revendications 1 à 6, dans lequel tous les guides d'onde ont une même épaisseur, les variations de section correspondant à des variations de largeur.


**Patentansprüche**

1. Ein Koppler/Verteiler bzw. Splitter der erste und zweite planparallele Wellenleiter (21, 22) mit einem konstanten Querschnitt, die sich entlang einer gleichen Richtung erstrecken, und ein eingeschobenes Führungssegment (24) aufweist, das sich zwischen dem ersten und dem zweiten Leiter erstreckt, wobei das eingeschobene Führungssegment einen variablen Querschnitt aufweist so dass sein effektiver Index in der stromaufwärts zu stromabwärts Richtung von einem ersten niedrigeren Wert zu einem zweiten Wert, der höher ist als der effektive Index des ersten Wellenleiters, variiert, wobei das eingeschobene Führungssegment in seinem stromaufwärts Teil adiabatisch an den ersten Leiter gekoppelt ist und in seinem stromabwärts Teil mit dem zweiten Leiter gekoppelt ist.

2. Der Koppler/Verteiler nach Anspruch 1, wobei die Seite (25) des eingeschobenen Führungssegments, in der Nähe des ersten Wellenleiters, parallel zu der benachbarten Seite des ersten Wellenleiters ist.

3. Der Koppler/Verteiler nach Anspruch 2, wobei die Seite (15) des eingeschobenen Führungssegments, in der Nähe des ersten Wellenleiters, geradlinig ist.

4. Der Koppler/Verteiler nach Anspruch 3, wobei die Seite (16) des eingeschobenen Führungssegments, entfernt von dem ersten Wellenleiter, geradlinig ist.

5. Der Koppler/Verteiler nach einem der Ansprüche 1 bis 4, wobei der Koppler/Teiler eine Vielzahl von eingeschobenen Führungssegmenten (24-1, 24-2, ...) aufweist, die adiabatisch aneinander gekoppelt sind.

6. Der Koppler/Verteiler nach einem der Ansprüche 1 bis 5, wobei der erste Leiter, stromabwärts des eingeschobenen Führungssegments, einen wellenförmigen bzw. kurvigen Pfad aufweist.

7. Der Koppler/Verteiler nach einem der Ansprüche 1 bis 6, wobei alle Wellenleiter eine gleiche Dicke aufweisen und wobei die Querschnittsvariationen Breitenvariationen entsprechen.

**Claims**

1. A coupler/splitter comprising first and second coplanar waveguides (21, 22) of constant cross-section extending along a same direction, and an interposed guide segment (24) extending between the first and second guides, the interposed guide segment having a variable cross-section so that its effective index varies, in the upstream-to-downstream direction, from a first lower value to a second value higher than the effective index of the first waveguide, the interposed guide segment being adiabatically coupled to the first guide in its upstream portion and to the second guide in its downstream portion.

2. The coupler/splitter of claim 1, wherein the side (25) of the interposed guide segment close to the first waveguide is parallel to the adjacent side of the first waveguide.

3. The coupler/splitter of claim 2, wherein the side (15) of the interposed guide segment close to the first waveguide is rectilinear.

4. The coupler/splitter of claim 3, wherein the side (16) of the interposed guide segment distant from the first waveguide is rectilinear.

5. The coupler/splitter of any of claims 1 to 4, comprising a plurality of interposed guide segments (24-1, 24-2, ...) adiabatically coupled together.

6. The coupler/splitter of any of claims 1 to 5, wherein the first guide comprises, downstream of the interposed guide segment, a sinuous path.

7. The coupler/splitter of any of claims 1 to 6, wherein all the waveguides have a same thickness, the cross-section variations corresponding to width variations.

Fig 1

Fig 2A

Fig 2B

Fig 3

Fig 4

Fig 5

Fig 6

21

24-1    24-2

22

Fig 7

33-n

31    33-2    33-1

Fig 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008025665 A1

**Littérature non-brevet citée dans la description**

- **XIANKAI SUN.** *Hsi-Chun Liu et Amnon Yariv paru dans Optics Letters,* 01 Février 2009, vol. 34 (3